# EUROPEAN PATENT SPECIFICATION

(11) **EP 0 385 418 B1**
(45) Date of publication and mention of the grant of the patent: **18.01.1995**
(21) Application number: 90103864.6
(22) Date of filing: 28.02.1990
(51) Int. Cl.: G03H 1/02, G01D 5/38, G01D 13/04

(54) **Hologram scale having moisture resistance**
Feuchtigkeitsbeständige holographische Messskala
Echelle holographique résistant à l'humidité

(30) Priority: 28.02.1989 JP 47901/89; 26.10.1989 JP 279317/89
(43) Date of publication of application: 05.09.1990
(73) Proprietor: Sony Magnescale, Inc., Shinagawa-ku, Tokyo 141 (JP)
(72) Inventor: Tsuchiya, Hideki, c/o Sony Magnescale Inc., Shinagawa-ku, Tokyo (JP); Sato, Kenichi, c/o Sony Magnescale Inc., Shinagawa-ku, Tokyo (JP); Okubo, Hiroyuki, c/o Sony Magnescale Inc., Shinagawa-ku, Tokyo (JP)
(74) Representative: TER MEER STEINMEISTER & PARTNER GbR

(56) References cited:
- PATENT ABSTRACTS OF JAPAN, vol. 6, no. 248 (P-160)(1126), 7 December 1982 ; & JP-A-57 146 283
- PATENT ABSTRACTS OF JAPAN, vol. 10, no. 162 (P-466)(2218), 10 June 1986 ; & JP-A-61 014 620
- PATENT ABSTRACTS OF JAPAN, vol. 10, no. 93 (P-445)(2150), 10 April 1986 ; & JP-A-60 227 221
- PATENT ABSTRACTS OF JAPAN, vol. 11, no. 211 (P-594)(2658), 9 July 1987 ; & JP-A-62 032 485
- PATENT ABSTRACTS OF JAPAN, vol. 11, no. 260 (P-608)(2707), 22 August 1987 ; & JP-A-62 063 981
- PATENT ABSTRACTS OF JAPAN, vol. 11, no. 147 (P-575)(2594), 14 May 1987 ; & JP-A-61 284 789
- PATENT ABSTRACTS OF JAPAN, vol. 9, no. 68 (P-344)(1791), 28 March 1985 ; & JP-A-59 201 080
- PATENT ABSTRACTS OF JAPAN, vol. 9, no. 68 (P-344)(1791), 28 March 1985 ; & JP-A-59 201 081
- HANDBOOK OF OPTICAL HOLOGRAPHY, H.J. Caulfield, 1979, Academic Press, New York

## Description

### BACKGROUND OF THE INVENTION

### Field of the Invention

This invention relates to a hologram scale for measuring relative displacement quantities between two relatively displaceable mechanical components. More specifically, it relates to a hologram scale mounted on a linear encoder having high resolution.

### Description of the Prior Art

Optical scales for measuring relative displacement quantities between two mechanical components have been generally known as metallic pattern scales which are made by the method of applying photoresists on the surface of a metallic substrate glass scale, then projecting patterns having desired pitches by a continuous step and repeat method, and after projection, supplying a development treatment or etching for the glass scale. These metallic scales have pitches on an order of 10 microns.

Recently however, processing accuracy on the order of 0.1 microns has been required for some applications, such as when processing spindles for video tape recorders. Therefore, conventional metallic scales are not sufficient as a displacement measuring system.

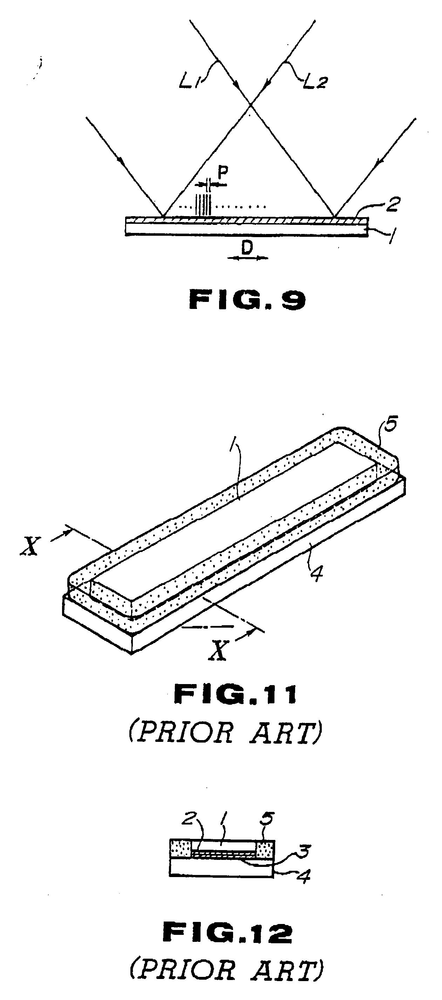

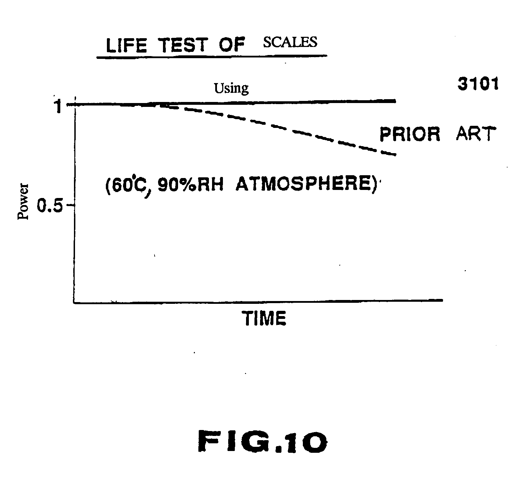

In order to solve the above problem, holographic techniques have been applied in this field. A typical process for producing a hologram scale are shown in Fig. 9. The surface of a base substrate 1, essentially a glass substrate, are is adhered to a hologram film 2 formed by an emulsion of silver salts, dichromated gelatin (DCG) or the like. Laser beams L₁ and L₂ which are parallelized laser beams having specified wavelength λ are irradiated so as to intersect at a desired angle which causes interference fringes to be formed at regular pitches P. These pitches, caused by the intersection of lasers L₁ and L₂ are transferred to the hologram film 2 directly. Then, if silver salts are used for emulsion of the hologram film 2, development and bleaching are performed so that the interference fringes are fixed, forming a scale with the pitches P as its unit of measure (a kind of diffraction grating). This diffraction grating may be considered as phase type hologram or volume type hologram. The pitches P of the hologram scale can be practically formed at intervals of 0.5 microns, so a resolution of twenty times that of conventional metallic pattern scales can be achieved.

To further improve processing accuracy, linear encoders having high resolutions are desired. Hologram scales as aforementioned are utilized for such linear encoders, which have strict accuracy and resolution requirements.

However, generally, holograms formed on such as a glass scale are strongly affected by humidity. For example, when a glass scale is exposed to temperatures of 30 °C or so, and a humidity of about 60 %RH for extended periods, the scale, depending on differences in the refractive index of a hologram, becomes unreadable and cannot be used as a scale. Therefore, sealed holograms have been required to increase moisture resistance.

Japanese Patent First Publication (Tokkai) No.62-32485 discloses a hologram scale as shown in Figs. 11 and 12. A surface of a glass base substrate 1, with a hologram film 2 adhered, is fixed to a cover substrate 4, which widely surrounds the hologram, for protection and fixed to the glass base substrate by light transmitting adhesives 3. The width of the base substrate 1 is generally narrower than that of the cover substrate 4, and this difference in width is made up by an adhesive composed of epoxy resins (EP) which substantially surround the base substrate 1 and effectively bond it to the cover substrate 4. According to this prior art, as shown in Fig. 12, the hologram film 2 can substantially be sealed from ambient air by adhesives 5, so that the moisture resistance of the hologram film 2 can be improved. However, in this type of hologram scale, the linear expansion coefficients of the adhesive 5 and the cover substrate 4 are different so that curvature of the scale per se is caused when the scale faces high temperatures, and peeling of the base substrate 1 is caused when the scale faces low temperatures. Additionally, the aforementioned type of the scale is of complex structure and manufacture of such a scale takes a long time because the process for forming this comprises two steps using two adhesives 3, and 5.

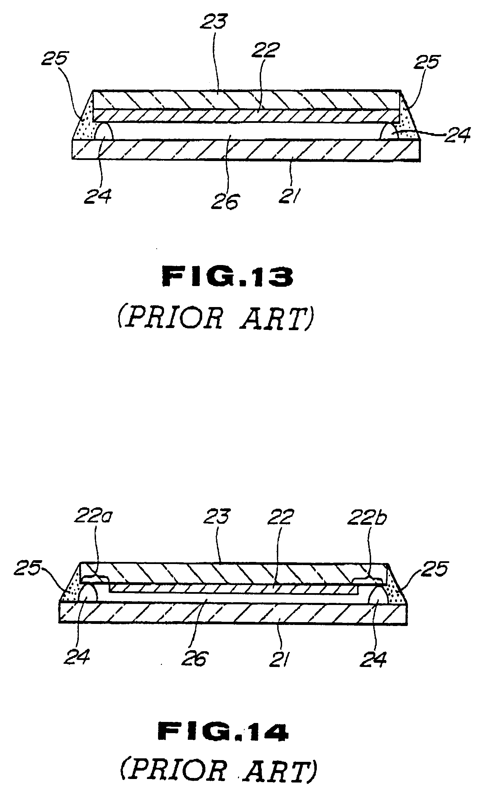

Japanese Patent First Publication (Tokkai) No.57-146283 discloses a sealing means for a hologram as shown in Fig. 13. In Fig. 13, a hologram film 22 is adhered to a glass substrate 23 and a protective glass substrate 21 is fitted therebelow via spacers 24. The outer sides of the spacers 24 are sealed by adhesives 25. A cavity 26 is defined by the hologram film 22 and the protective glass substrate 21 which sealed facing each other by adhesives 25, and in this cavity 26, dry air is trapped. According to this structure, deterioration of the hologram can be prevented because the hologram film 22 is exposed to an environment having relatively low humidity. Alternatively, a modified embodiment of the seal means for the hologram of Fig. 13 is shown in Fig. 14. In this case, parts of a hologram film 22a and 22b are removed, then the ends of the spacers 24 come in direct contact with the glass substrate 23. According to this modification, the adhesive strength of the adhesives 25 can be increased because, since hologram films are often formed of gelatin etc. and do not provide a strong bond with adhesives, the spacers 24 and adhesives 25 do not directly contact the hologram film 2.

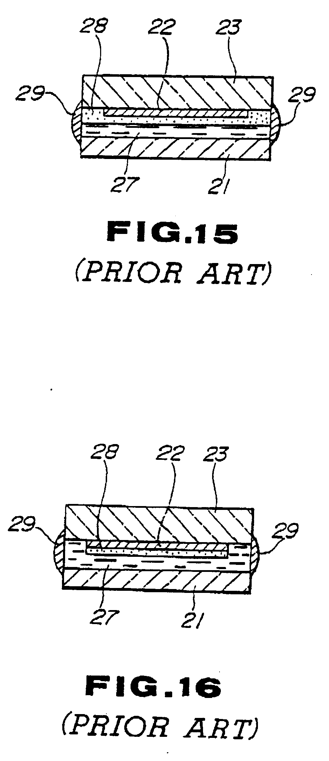

Another sealing means for a hologram is disclosed in Japanese Patent First Publication (Tokkai) No.61-6681 as shown in Fig. 15. Referring now to Fig. 15 whose reference numerals are similar to Fig. 13, on a surface of a hologram film 22 adhered to a glass substrate 21, a protective glass substrate 21 is adhered through a first resin layer 27 and a second resin layer 28. The first and second resin layers 27, 28 are peripherally sealed with a sealing material 29. According to this disclosure, deterioration of the hologram can be prevented because the hologram film 22 is sealed from ambient environmental conditions by the first and second resin layers 28 and the seal material 29. Alternatively, deterioration of the hologram can also be prevented if the second resin layer 28 is applied only directly over the surface of the hologram film 22 as shown in Fig. 16.

However, In the previously descibed process in which dry air etc. is trapped in a cavity 26 within the scale, manufacture of the hologram scale is complicated and expensive. Additionally, the refractive index of the cavity 26 is greatly different from that of the protective glass substrate 21, furthermore, maintaining a uniform thickness of the cavity 26 is very difficult and so the diffraction efficiency of the hologram film 22 is comprimised and becomes nonuniform, thus the accuracy of the hologram as a linear encoder tends to deteriorate.

On the other hand, in the case of coating a hologram film 22 with resin layers 27 and 28, as described above, the dispersion of the resins is difficult to maintain at a constant thickness, therefore the diffraction efficiency of the hologram film 22 is comprimised and becomes unsuitable as a linear encoder. Furthermore, bubbles tends to contaminate the resins 27, 28, therefore, diffracted light from the hologram film 22 is caused high turbulence, so accurate position signals cannot be obtained when the hologram is assembled as a linear encoder.

Further to say, in the case of using a seal material 29 as a molding around the periphery of a glass substrate 23 on which a hologram film 22 is adhered with a protective glass substrate 21 further adhered thereon through relatively thick resins, the thermal expansion coefficients among the resins, the protective glass substrate 21 and the glass substrate 23 are quite different. Therefore, according to alterations in ambient temperature, curvature is caused in the seal of hologram assembly. and more to say, peeling of the interface portions of the hologram film 22 is caused by strain to the glass substrate 23 due to these conditions.

Another sealing means for a hologram is disclosed in Japanese patent first publication No. 62-63981. When manufacturing this prior art hologram, the hologram is formed on a base substrate, the hologram is covered by a first adhesive, and then a protective substrate is pressed against the adhesive. Subsequently, a part of the material of the substrate is removed along the peripheral edge of the hologram and the adhesive layer to form a circumferential groove within the circumferential surface of the arrangement, which groove is filled with a second adhesive having moisture resistance properties.

### SUMMARY OF THE INVENTION

It is the object of the present invention to provide a hologram scale having a simple design and at the same time good moisture resistance properties. It is another object to provide a method for manufacturing such a hologram scale.

Concerning the hologram scale, the object is solved by the teaching of claim 1, whereas concerning the method, the object is solved by the teaching of claim 15.

It is an essential feature of the present invention that a single adhesive having moisture resistance is used within a border region surrounding the hologram film, and that the adhesive within said border has a width which is selected in dependence of the moisture resistance of the adhesive layer material in a way to achieve a predetermined sealing performance. In contrast to this, all prior art designs except those which include mechanical spacers (see Figs. 13 and 14) use two adhesives, one for adhering the two substrates together via the hologram, and a second having good moisture resistance and surrounding the peripheral edge of the layer of the first adhesive. This second adhesive is either applied onto the peripheral surface of the arrangement or embedded within a groove provided within the peripheral surface of the arrangement.

When applying the single adhesive only in the border region around the hologram film, the material of the adhesive can be selected without having to consider optical properties of the same.

The base substrate may preferably be extended beyond the dimensions required for the hologram scale in a direction parallel to the pitch of the diffraction grating to may be used as a datum clamp face. Alternatively either the base of protective substrates may be extended in any desired direction to facilitate a variety of mounting requirements.

### BRIEF DESCRIPTION OF THE DRAWINGS

The present invention will be understood more fully from the detailed description given herebelow and from the accompanying drawings of the preferred embodiments of the present invention, which, however, should not be taken to limit the invention to the specific embodiments, but are for explanation and understanding only.
In the drawings:
Fig. 1 is a perspective view of a hologram scale according to the present invention;
Fig. 2 is a side view of a hologram scale according to the present invention taken in the direction of the arrow II in Fig. 1;
Fig. 3 is a perspective view of the base substrate of Fig. 1;
Fig. 4 is a perspective view of a modified embodiment of Fig. 1 according to the present invention;
Fg. 5 is a perspective view of a second embodiment according to the present invention;
Fig. 6 is an enlarged sectional view taken along line V-V of Fig. 5;
Fig. 7 is a perspective view of a manufacturing stage of a hologram scale according to the second embodiment;
Fig. 8 is a perspective view of a modified embodiment of Fig. 5 according to the present invention;
Fig. 9 is a line view showing a general principle of holography;
Fig. 10 is a graph of Life-tests showing the relationship between time and the adhesive power of various adhesives;
Fig. 11 is a perspective view of a hologram scale according to a prior art invention;
Fig. 12 is a sectional view taken along line X-X of Fig. 11;
Figs. 13, 14, 15 and 16 are sectional views of a hologram scale according to other prior art inventions.

### DETAILED DESCRIPTION OF THE PREFERRED EMBODIMENTS

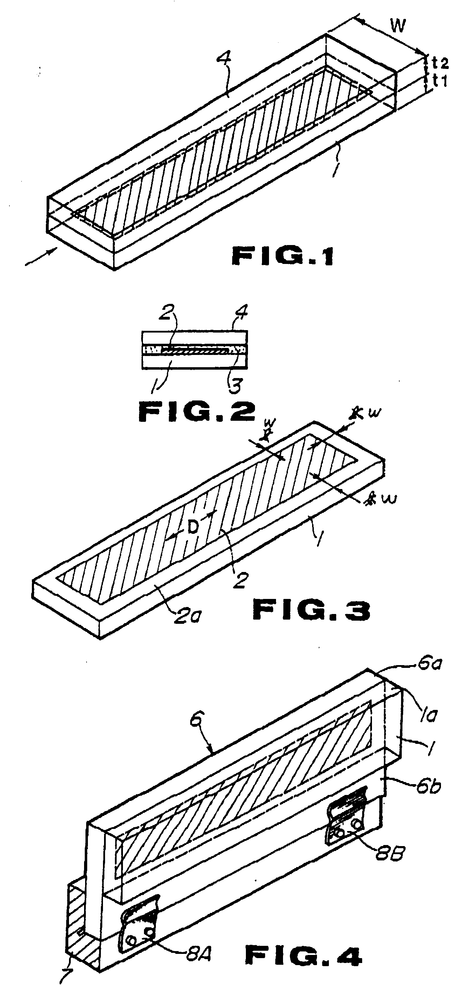

Referring now to the drawings, the numerals in Figs. 1 to 3 indicate members which correspond to members with identical numerals in Figs. 11 and 12.

Fig. 1 and Fig. 2 show the first embodiment of a hologram scale according to the present invention. The hologram scale is composed of a base substrate 1, on which a hologram film 2 with a diffraction grating exposed thereon for acting as a scale is adhered, and a protective substrate 4. The base substrate 1 includes an exposed portion 2a to which does not contact the hologram film. The surface of the base substrate 1 to which the hologram film 2 is adhered is further adhered to the protective substrate 4 through light transmitting adhesives 3 having sealant properties. Referring to Figs. 1 and 2, the process for making a hologram scale according to the invention is as follows; The diffraction grating is formed on the hologram film 2 which initially covers the whole surface of the base substrate 1, then the portion of the hologram film 2 corresponding to the exposed portion 2a is removed. Alternatively, the hologram film 2 may be formed after masking a portion of the base substrate 1 corresponding to the exposed portion 2a. Both the surfaces where the hologram film 2 is adhered and the exposed portion 2a are adhered to the protective substrate 4 through light transmitting adhesives 3 having sealant properties. Thus the hologram film is adhered between the two substrates 1 and 4, thereby sealing the hologram film 2 from the ambient environment.

Both the base substrate 1 and the protective substrate 4 are formed using glass plates having same width W and same length, relative the scale portion. The thickness of the base substrate 1 and the protective substrate 4 are determined t₁ and t₂, respectively. For example, W is determined in a range of about 10 to 20 mm, and t₁, t₂ are determined in a range of about 2 to 3 mm, respectively. Referring now to Fig. 3, the exposed portion 2a is formed by removing a portion of the hologram film 2 from the peripheral area of the base substrate 1. The diffraction grating is formed on the hologram film 2 having a pitch 0.5 »m in the direction D in Fig. 3. The whole surface of the hologram film 2 and the exposed portion 2a of the base substrate then have light transmitting adhesives 3, having sealant properties, applied thereover. Then the surface as a whole (2 and 2a)is adhered to the protective substrate 4. Among available adhesives 3 having sealant properties, it is preferrable to use adhesives having a diffusion coefficient D of less than 6 x 10⁻⁷ at 60° C in 90 %RM atmosphere, according to Fick's diffusion formula. Fick's diffusion formula is already known and is as follows;$\text{Mt/M∞ =} \frac{\text{4/b}}{\text{(D/π)²t²}}$
wherein$\text{Mt = (Wt-Wo)/Wo x 100}$
- Wo: : dried weight of sample
- Wt: : sample weight after abosorbing moisture in a predetermined atmosphere after t hours,
- M∞: : Percentage of balanced absorption,
- D: : Diffusion coefficient,
- b: : Sample thickness,
- t: : time (hours).

Adhesives are also preferrable which have a refractive index relatively similar to glass, specifically, adhesives having such light transmitting qualities as acrylic resin, epoxy resin (the improved type having both light transmitting and moisture resistant properties) or the like, are preferred. For example, 3101 (a resistered trademark of Three Bond Co., Ltd.), KV-480, KW-450, KS-420 (these adhesives are resistered trademarks of TOYOBO Co., LTD.), and 301-2 (a resistered trademark of EPOXY TECHNOLOGY INC.) are preferable.

Life-tests were performed for scales using 3101 adhesive as well as for scales using adhesives as in the prior art. The results of the tests are shown in Fig. 10. As shown by Fig. 10, a hologram scale using adhesive 3101 indicates long life and its adhesive power was maintained over long periods, while a hologram scale of the prior art aged speedily and the adhesive power of its adhesive weakened considerably sooner.

In Fig. 3, through the width w of the exposed portion 2a is determined at about 3 mm, it may be determined at about 1 mm if adhesives having high moisture resistance are used as the light transmitting sealant adhesives 3. The total thickness of the adhesive 3, when the base substrate 1 and the protective substrate 4 are adhered to each other, is about 10 »m.

According to this embodiment, the hologram film 2 on the base substrate 1 is sealed from the ambient environment by the layer of light transmitting sealant adhesive 3 filling the exposed portion 2a. Therefore, even with such a simple construction, the effects of moisture can be suitably prevented.

Additionally, according to this embodiment, if the linear expansion coefficient between the adhesive 3 and the base substrate 1 become greatly different, the adhesive 3 can expand and/or contract along with the base substrate 1 and the protective substrate 4 because the total thickness of the adhesive layer is only about 10 »m. Therefore, curvature or peeling of the hologram scale can be prevented.

A detailed manufacturing method for the above hologram scale is described hereinbelow.

The base substrate 1 is prepared by applying holographix film to the whole of one surface thereof. A diffraction grating in the direction D of Fig. 3 having a pitch of 0.5 »m is formed on the whole surface of the hologram film 2 using conventional holography technique. More specifically, details such as printing, exposure, development and bleaching may be neseccary if the hologram film 2 uses an emulsion of silver salts. Treatment until the holographic exposure is terminated is generally performed in a darkroom. Then, the exposed portion 2a is formed by removing a surrounding portion of the hologram film 2 by using mechanical, chemical or electronic techniques.

According to this method, no special preparations are required for the darkroom treatments. Therefore, the base substrate 1 can be formed more easily, that is, the hologram scale per se can be manufactured easily.

Additionally, in the step of applying the hologram film 2 to the base substrate 1, techniques may be used that leave the exposed portion 2a untouched, using techniques such as masking.

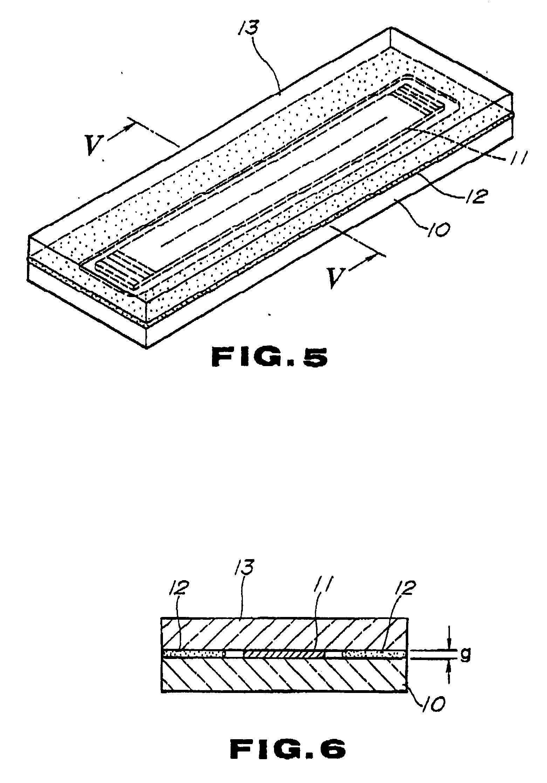

Fig. 4 shows a modified embodiment of the first embodiment as aforementioned. Referring now to Fig. 4, the width of a protective substrate 6 is determined to be larger than width of a base substrate 1. Then, an offset portion 6b of the protective substrate 6 is mounted on a slider 7. The protective substrate 6 is fixed to the slider 7 in the lengthwise direction by fixing means such as flat springs 8A and/or 8B. The slider 7 is mounted on one of two relatively displaceable mechanical components, and a detecting element for the hologram scale is mounted on the other component. The position of the detecting element may be determined by an edge 6a of the protective substrate 6 utilized as a datum clamp face. However in this case, an edge 1a of the base substrate 1 is not to be projected beyond the edge 6a of the protective substrate 6.

According to this modified embodiment of the present invention, the protective substrate 6 can not only be used as the protective component but as the mounting component of the hologram scale per se. Therefore, the modified embodiment can be mounted easily to the component such as the slider 7 in spite of its simple structure.

Further to say, in the embodiment shown in Fig. 1, dimensions of the protective substrate 4 may be determined to be smaller than dimensions of the base substrate 1. Additionally, the base substrate may be enlarged to allow for a mounting structure, essentially opposite to the construction described above. However, in all cases the area of the smaller of the substrates must be determined having at least an area at least to substantially cover the hologram film 2 of the base substrate 1.

Figs. 5 to 6 show the second embodiment of the present invention. A hologram film 11 is formed of a photo-sensitive material of, for example, silver salts and is adhered to the center of a base substrate 10. A hologram is formed by transferring an interference fringe of a desired pitch (for example, about 0.5 »m) from intersecting laser beams to the hologram film 11. Adhesives 12 having sealant properties are applied to the base substrate 10 in an area surrounding, but not contacting, the hologram film 11. The base substrate 10 is adhered to the protective substrate 12 directly by pressing the adhesive-coated surface of the base substrate 10 against the protective substrate 13, thus trapping the hologram film 11 securely therein, the face thereof directly contacting the inner surface of the protective substrate. Here, adhesives can be used which have similar properties to those of the first embodiment. However, because of the structure of the second embodiment, adhesives having no light transmitting properties (the refractive index of the adhesive may be different from glass) may also be used as the sealant adhesive 12, so epoxy resin adhesives (of the generally used type) can be used in this embodiment. Epoxy resin adhesives have greater moisture resistance than acrylic resin adhesives which have excellent light transmittance. For example, adhesives such as 2003 (a resistered trademark of Three Bond Co., Ltd.), TORR SEAL (a resistered trademark of VARIAN Associates.) are preferable.

Life-tests were performed for scales using 2003 and TORR SEAL adhesives as well as for scales using adhesives found in the prior art. The results are shown in Fg. 10. Tests for hologram scales using the adhesives 2003 and TORR SEAL indicated long life and their adhesive power was maintained over long periods, while hologram scales using adhesives of the prior art aged speedily and their adhesives weakened considerably sooner.

As shown in Fig. 6, in this embodiment, the thickness of the base substrate 10 and the protective substrate 13 are each about 2.3 »m, and the thickness of the hologram film 11 is about 6 »m. Therefore, thickness of the sealant adhesive 12 between the base substrate 10 and the protective substrate 13 is also about 6 »m.

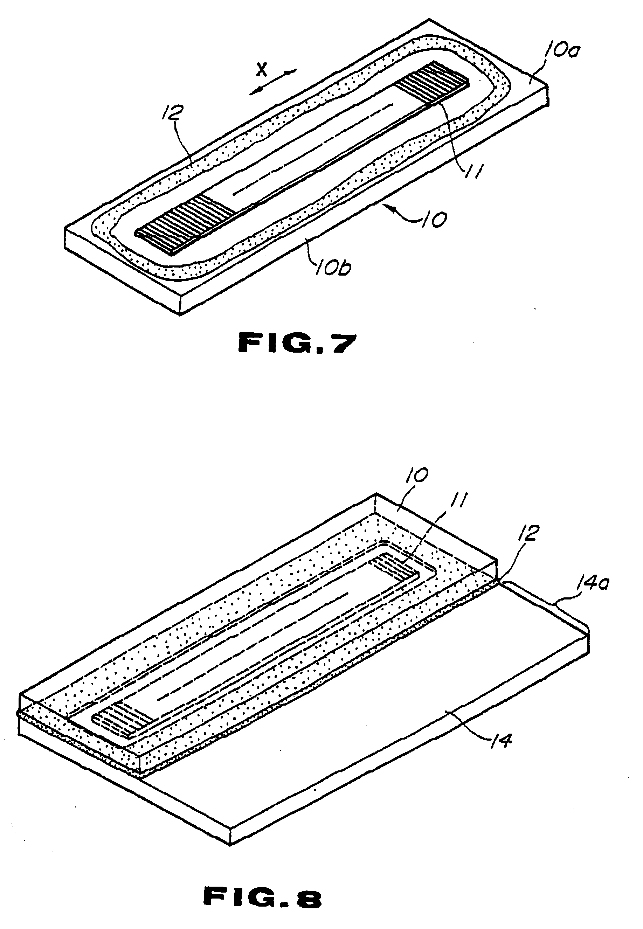

Referring now to Fig. 7, the method for manufacturing the hologram scale of this embodiment comprises the steps as follows: The hologram film 11 is uniformly applied to the whole surface 10a of the base substrate 10. Interference fringes produced by laser beams are exposed on the hologram film 11, developed, fixed and bleached. As a result, a phase type hologram having good diffraction efficiency is obtained. In this hologram, a scale having a desired pitch is formed in a lengthwise direction (the direction of line X in Fig. 7) of the hologram film. Next, the portion of the hologram film 11 covering the peripheral area of the base substrate 10 is removed chemically, electronically or mechanically, the hologram film 11 remaining only in the central portion of the surface 10a of the base substrate 10. Alternatively, at this stage, the hologram film 11 may be applied as required, to only the central portion of the base substrate 10. The hologram scale of this embodiment is completed by pressing the protective substrate 13 onto the surface 10a of the base substrate 10 after applying a sealant adhesive 12 to the portions of the base substrate 10 surrounding the remaining hologram film 11.

According to the hologram scale construction of this embodiment, nonuniformity of the diffraction efficiency of the hologram film 11 can be avoided, because the clearance gap between the hologram film 11 and the protective substrate 13 is essentially nothing, and since no adhesive is applied on the surface of the hologram film 11, no bubbles will form which could contaminate the surface of the hologram film 11. Therefore, the accuracy of measuring will not deteriorate when the hologram scale is set in a linear encorder.

Additionally, curvature of the hologram scale which caused by differences among the linear expansion coefficients of the sealant adhesives 12, the substrates 10 and 13 are effectively eliminated because the thickness of the sealant adhesives 12 are essentially the same as the thickness of the hologram film 11.

Further to say, according to this embodiment, the structure is very simple, therefore, manufacturing costs can be reduced.

More to say, the selection of suitable adhesives, such as epoxy resins having good moisture resistance and good adhesive strength, can be accomplished more freely, since the sealant adhesives 12 of this embodiment are not limited to the light transmittant adhesives.

Fig. 8 shows a modification of the embodiment of Figs. 5 to 7. Like reference numerals indicate like members, corresponding to those shown in Fig. 5. In this modified embodiment, the width of the protective substrate 14 is wider than the width of the base substrate 10. Otherwise, the structure of the scale is similar to the second embodiment shown in Fig. 5. As shown in Fig. 8, an offset portion 14a of the protective substrate 14 which extends from the base substrate 10 can be used as a datum clamp face when the hologram scale is mounted.

Although the present invention has been shown and described with respect to detailed embodiments thereof, it should be understood by those skilled in the art that various changes in form and detail thereof may be be made without departing from the scope of the appended claims, for example, the base substrate 10 may be made larger than the protective substrate 14, and/or sensitizing materials other than silver salts may be used in the manufacture of the hologram film 11.

## Claims

1. A hologram scale comprising:
- a base substrate (1; 10);
- a hologram film (2; 11) being provided with a diffraction grating of a desired pitch, said hologram film being adhered to a surface of the base substrate and covering only a central surface portion thereof such that a border surface portion, circumferentially surrounding the hologram film and extending inwardly from the edges of said base substrate towards the hologram film, is not covered by said hologram film;
- a protective substrate (4; 13) opposite the base substrate on the same side as the hologram film;
**characterized in that**
- there is only a single further component for bonding the substrates together and for sealing the hologram film against moisture, and in that
- said component is an adhesive moisture resistant layer (3; 12) bonding the base substrate and the protective substrate together at least along said border surface portion, whereby the width of said adhesive layer within the border surface region is selected dependent on the moisture resistance of the adhesive layer material such that a moisture seal is obtained.

2. The hologram of claim 1, **characterized in that** said adhesive layer material is transparent and covers additionally the hologram film (2, 11).

3. The hologram scale of claim 1, **characterized in that** said adhesive layer material is non-transparent and surrounds said hologram film (11) within said extended border by keeping a distance against it.

4. The hologram scale as set forth in one of the preceding claims, wherein said adhesive moisture resistant layer (3; 12) is established by using adhesives having moisture resistance which are selected from the groups of adhesives having a diffusion coefficient D, at 60°C in 90 %RH atmosphere, of less than 6 x 10⁻⁷, according to Fick's diffusion formula.

5. The hologram scale as set forth in claims 2 and 4, wherein said adhesives for said transparent moisture resistant layer are selected from the groups of adhesives which have a refractive index relatively similar to glass.

6. The hologram scale as set forth in claim 1 or 2, wherein said moisture resistant layer is established by using adhesives which are selected from light-transmitting adhesives having moisture resistance.

7. The hologram scale as set forth in claim 6, wherein said adhesives are acrylic resins, and/or epoxy resins having light transmitting properties.

8. The hologram scale as set forth in claim 3, wherein said adhesive layer materials are selected from non light-transmitting adhesives having moisture resistance.

9. The hologram scale as set forth in claim 1, 2 or 3, wherein the thicknesses of said base substrate (1; 10) and said protective substrate (4; 13) are in the range of about 2 to 3 mm.

10. The hologram scale as set forth in claim 9. wherein said thicknesses are each about 2.3 mm.

11. The hologram scale as set forth in claim 1 or 2, wherein the thickness of said adhesive moisture resistant layer is about 10 »m.

12. The hologram scale as set forth in claim 1 or 3, wherein the thickness of adhesive which establishes said moisture resistive layer is equal to the thickness of said hologram film, which is about 6 »m.

13. The holgram scale as set forth in claim 1, 2 or 3, wherein the pitch of the diffraction grating of said hologram film is about 0.5 »m.

14. The hologram scale as set forth in claim 1, 2 or 3, wherein said protective substrate (4; 13) is extended from said hologram scale in the direction of the pitches of said diffraction grating.

15. A method of manufacturing a hologram scale according to claim 1 comprising the steps of:
- applying a hologram film over the whole of one surface of said base substrate;
- forming a hologram on said hologram film by exposing to laser light, then developing, fixing and bleaching the film;
- removing peripheral portions of said hologram film to provide a circumferentially extending border surface region which extends inwardly from the edges of the base substrate;
- applying only a single further component for bonding the substrates together and for sealing the hologram film against moisture, said component being a moisture resistant adhesive which is applied to the circumferentially extending border surface region in an amount such that after pressing the protective substrate against the base substrate, the width of the adhesive layer is sufficient for obtaining a predetermined sealing performance; and
- pressing the protective substrate against the base substrate so as to adhere them via the adhesive.

16. The method of claim 15, wherein a transparent adhesive is used which is additionally applied onto said hologram film.

17. The method of claim 15, wherein a non-transparent adhesive is used which is only applied to said circumferentially extending border surface region.

18. The method as set forth in claim 15, wherein said hologram film is removed by using chemical, electronic and/or mechanical techniques.

19. The method as set forth in claim 15, wherein said hologram film is applied to a central portion of said base substrate.

20. The method as set forth in claim 19, wherein said hologram film is applied to a desired position using masking techniques.

21. The method as set forth in clami 15, wherein said protective substrate is used as a datum clamp face.

## Patentansprüche

1. Holographische Meßskala mit:
- einem Trägersubstrat (1; 10);
- einem Hologrammfilm (2; 11), der mit einem Beugungsgitter mit gewünschtem Strichabstand versehen ist und der an einer Oberfläche des Trägersubstrats befestigt ist und nur den mittleren Oberflächenbereich desselben so abdeckt, daß ein Randoberflächenbereich, der den Hologrammfilm am Umfang ergibt und sich nach innen ausgehend von den Kanten des Trägersubstrats zum Hologrammfilm hin erstreckt, nicht vom Hologrammfilm abgedeckt ist;
- einem Schutzsubstrat (4; 13), das dem Trägersubstrat auf derselben Seite wie der Hologrammfilm gegenüberliegt;
**dadurch gekennzeichnet, daß**
- nur eine einzige weitere Komponente zum Verbinden der Substrate miteinander und zum Abdichten des Hologrammfilms gegen Feuchtigkeit vorhanden ist und daß
- die Komponente eine klebende, feuchtigkeitsbeständige Schicht (3; 12) ist, die das Trägersubstrat und das Schutzsubstrat zumindestens entlang dem genannten Randflächenbereich miteinander verbindet, wobei die Breite der Kleberschicht innerhalb des Randflächenbereichs abhängig von der Feuchtigkeitsbeständigkeit des Kleberschichtmaterials so ausgewählt ist, daß Feuchtigkeitsabdichtung erzielt ist.

2. Holographische Meßskala nach Anspruch 1, **dadurch gekennzeichnet,** daß das Kleberschichtmaterial transparent ist und zusätzlich den Hologrammfilm (2, 11) bedeckt.

3. Holographische Meßskala nach Anspruch 1, **dadurch gekennzeichnet, daß** das Kleberschichtmaterial nicht transparent ist und den Hologrammfilm (11) innerhalb des genannten ausgedehnten Rands dadurch umgibt, daß es einen Abstand zu diesem einhält.

4. Holographische Meßskala nach einem der vorstehenden Ansprüche, bei der die klebende, feuchtigkeitsbeständige Schicht (3; 12) dadurch hergestellt wird, daß Kleber mit Feuchtigkeitsbeständigkeit verwendet werden, die aus der Gruppe von Klebern ausgewählt sind, die gemäß der Fickschen Diffusionsformel in einer Umgebung von 60 °C und 90 % relativer Feuchtigkeit einen Diffusionskoeffizienten D von weniger als 6 x 10⁻⁷ aufweisen.

5. Holographische Meßskala nach den Ansprüchen 2 und 4, bei der die Kleber für die transparente, feuchtigkeitsbeständige Schicht aus Gruppen von Klebern ausgewählt sind, die einen Brechungsindex aufweisen, der dem von Glas ziemlich ähnlich ist.

6. Holographische Meßskala nach einem der Ansprüche 1 oder 2, bei der die feuchtigkeitsbeständige Schicht dadurch hergestellt wird, daß Kleber verwendet werden, die aus lichtdurchlässigen Klebern mit Feuchtigkeitsbeständigkeit ausgewählt sind.

7. Holographische Meßskala nach Anspruch 6, **dadurch gekennzeichnet, daß** die Kleber Acrylharze und/oder Epoxidharze mit Lichttransmissionseigenschaften sind.

8. Holographische Meßskala nach Anspruch 3, bei der die Kleberschichtmaterialien aus nicht lichtdurchlässigen Klebern mit Feuchtigkeitsbeständigkeit ausgewählt sind.

9. Holographische Meßskala nach einem der Ansprüche 1, 2 oder 3, bei der die Dicken des Trägersubstrats (1; 10) und des Schutzsubstrats (4; 13) im Bereich von ungefähr 2 bis 3 mm liegen.

10. Holographische Meßskala nach Anspruch 9, bei der die Dicken jeder derselben ungefähr 2,3 mm betragen.

11. Holographische Meßskala nach einem der Ansprüche 1 oder 2, bei der die Dicke der klebenden, feuchtigkeitsbeständigen Schicht ungefähr 10 »m beträgt.

12. Holographische Meßskala nach einem der Ansprüche 1 oder 3, bei der die Dicke des Klebers, der die feuchtigkeitsbeständige Schicht bildet, der Dicke des Hologrammfilms entspricht, die ungefähr 6 »m ist.

13. Holographische Meßskala nach einem der Ansprüche 1, 2 oder 3, bei der der Strichabstand des Beugungsgitters des Hologrammfilms ungefähr 0,5 »m ist.

14. Holographische Meßskala nach einem der Ansprüche 1, 2 oder 3, bei der das Schutzsubstrat (4; 13) gegenüber der holographischen Skala in Richtung der Striche des Beugungsgitters verlängert ist.

15. Verfahren zum Herstellen einer holographischen Meßskala nach Anspruch 1, mit den folgenden Schritten:
- Aufbringen eines Hologrammfilms auf die gesamte eine Fläche des Trägersubstrats;
- Ausbilden eines Hologramms auf dem Hologrammfilm, dadurch, daß dieser Laserlicht ausgesetzt wird und dann der Film entwickelt, fixiert und gebleicht wird;
- Entfernen von Randbereichen des holographischen Films, um einen sich in Umfangsrichtung erstreckenden Randflächenbereich zu schaffen, der sich innerhalb der Kanten des Trägersubstrats erstreckt;
- Auftragen nur einer einzigen weiteren Komponente zum Verbinden der Substrate miteinander und um den Hologrammfilm gegen Feuchtigkeit abzudichten, welche Komponente ein feuchtigkeitsbeständiger Kleber ist, der mit solcher Menge auf den sich in Umfangsrichtung erstreckenden Randflächenbereich aufgetragen wird, daß die Breite der Kleberschicht nach dem Anpressen des Schutzsubstrats auf das Trägersubstrat dafür ausreicht, daß ein vorgegebenes Abdichtvermögen erzielt wird; und
- Anpressen des Schutzsubstrats gegen das Trägersubstrat, um sie über den Kleber aneinander zu befestigen.

16. Verfahren nach Anspruch 15, bei dem ein transparenter Kleber verwendet wird, der auch auf den Hologrammfilm aufgetragen wird.

17. Verfahren nach Anspruch 15, bei dem ein nicht transparenter Kleber verwendet wird, der nur auf den sich im Umfangsrichtung erstreckenden Randflächenbereich aufgetragen wird.

18. Verfahren nach Anspruch 15, bei dem der Hologrammfilm durch chemische, elektronische und/oder mechanische Techniken entfernt wird.

19. Verfahren nach Anspruch 15, bei dem der Hologrammfilm auf den mittleren Bereich des Trägersubstrats aufgebracht wird.

20. Verfahren nach Anspruch 19, bei dem der Hologrammfilm unter Verwendung von Maskierungstechniken in einer gewünschten Position aufgebracht wird.

21. Verfahren nach Anspruch 15, bei dem das Schutzsubstrat als Bezugsklemmfläche verwendet wird.

## Revendications

1. Echelle holographique comprenant:
- un substrat de base (1 ; 10);
- un film holographique (2; 11) muni d'un réseau de diffraction d'un pas souhaité, ledit film holographique étant amené à adhérer à une surface du substrat de base et recouvrant seulement une partie superficielle centrale de celui-ci de manière qu'une partie superficielle de bordure qui entoure le film holographique sur sa circonférence et qui s'étend vers l'intérieur depuis les bords dudit substrat de base en direction du film holographique ne soit pas recouverte par ledit film holographique;
- un substrat protecteur (4; 13) opposé au substrat de base sur le même côté que le film holographique;
caractérisée en ce que:
- il existe seulement un constituant supplémentaire unique pour relier entre eux les substrats et pour étanchéifier le film holographique contre l'humidité, et en ce que
- ledit constituant est une couche adhésive résistante à l'humidité (3; 12) reliant entre eux le substrat de base et le substrat protecteur au moins le long de ladite partie superficielle de bordure, la largeur de ladite couche adhésive dans la région superficielle de bordure étant choisie en fonction de la résistance à l'humidité du matériau de la couche adhésive de manière à obtenir une étanchéité à l'humidité.

2. Echelle holographique selon la revendication 1, caractérisée en ce que ledit matériau de la couche adhésive est transparent et recouvre en plus le film holographique (2; 11).

3. Echelle holographique selon la revendication 1, caractérisée en ce que ledit matériau de la couche adhésive est non transparent et entoure ledit film holographique (11) dans ladite bordure étendue en maintenant une distance avec lui.

4. Echelle holographique selon l'une des revendications précédentes, dans laquelle ladite couche adhésive résistante à l'humidité (3; 12) est formée au moyen d'adhésifs ayant une résistance à l'humidité qui sont choisis dans les groupes d'adhésifs ayant un coefficient de diffusion D, à 60°C dans une atmosphère à 90% de HR, inférieur à 6 x 10⁻⁷ selon la formule de diffusion de Fick.

5. Echelle holographique selon les revendications 2 et 4, dans laquelle lesdits adhésifs pour ladite couche transparente résistante à l'humidité sont choisis dans les groupes d'adhésifs qui ont un indice de réfraction relativement semblable au verre.

6. Echelle holographique selon la revendication 1 ou 2, dans laquelle ladite couche résistante à l'humidité est formée au moyen d'adhésifs qui sont choisis parmi les adhésifs transmettant la lumière ayant une résistance à l'humidité.

7. Echelle holographique selon la revendication 6, dans laquelle lesdits adhésifs sont des résines acryliques et/ou des résines époxy ayant des propriétés de transmission de la lumière.

8. Echelle holographique selon la revendication 3, dans laquelle lesdits matériaux de la couche adhésive sont choisis parmi les adhésifs transmettant la lumière ayant une résistance à l'humidité.

9. Echelle hologaphique selon la revendication 1, 2 ou 3, dans laquelle les épaisseurs dudit substrat de base (1 ; 10) et dudit substrat protecteur (4 ; 13) sont dans la plage d'environ 2 à 3 mm.

10. Echelle holographique selon la revendication 9, dans laquelle lesdites épaisseurs sont chacune d'environ 2,3 mm.

11. Echelle holographique selon la revendication 1 ou 2, dans laquelle l'épaisseur de ladite couche adhésive résistante à l'humidité est d'environ 10 »m.

12. Echelle holographique selon la revendication 1 ou 3, dans laquelle l'épaisseur de l'adhésif qui forme ladite couche résistante à l'humidité est égale à l'épaisseur dudit film holographique qui est d'environ 6 »m.

13. Echelle holographique selon la revendication 1, 2 ou 3, dans laquelle le pas du réseau de diffraction dudit film holographique est d'environ 0,5 »m.

14. Echelle holographique selon la revendication 1, 2 ou 3, dans laquelle ledit substrat protecteur (4 ; 13) est prolongé depuis ladite échelle holographique dans la direction des pas dudit réseau de diffraction.

15. Procédé de fabrication d'une échelle holographique selon la revendication 1, comprenant les étapes suivantes:
- appliquer un film holographique sur la totalité d'une surface dudit substrat de base ;
- former un hologramme sur ledit film holographique par exposition à une lumière laser, puis développer, fixer et blanchir le film;
- retirer les parties périphériques dudit film holographique pour former une région superficielle de bordure qui s'étend sur la circonférence et qui s'étend vers l'intérieur depuis les bords du substrat de base ;
- appliquer seulement un constituant supplémentaire unique pour relier entre eux les substrats et pour étanchéifier le film holographique contre l'humidité, ledit constituant étant un adhésif résistant à l'humidité qui est appliqué à la région superficielle de bordure qui s'étend sur la circonférence en une quantité telle que, après pressage du substrat protecteur contre le substrat de base, la largeur de la couche adhésive soit suffisante pour obtenir des performances d'étanchéité prédéterminées; et
- presser le substrat protecteur contre le substrat de base de manière à les faire adhérer par l'intermédiaire de l'adhésif.

16. Procédé selon la revendication 15, dans lequel un adhésif transparent est utilisé qui est appliqué en plus sur ledit film holographique.

17. Procédé selon la revendication 15, dans lequel un adhésif non transparent est utilisé qui est appliqué seulement sur ladite région superficielle de bordure qui s'étend sur la circonférence.

18. Procédé selon la revendication 15, dans lequel ledit film holographique est retiré au moyen de techniques chimiques, électroniques et/ou mécaniques.

19. Procédé selon la revendication 15, dans lequel ledit film holographique est appliqué à une partie centrale dudit substrat de base.

20. Procédé selon la revendication 19, dans lequel ledit film holographique est appliqué en une position voulue à l'aide de techniques de masquage.

21. Procédé selon la revendication 15, dans lequel ledit substrat protecteur est utilisé comme face de blocage de référence.
